# EUROPEAN PATENT APPLICATION

(11) **EP 2 286 670 A1**
(43) Date of publication of application: **23.02.2011**
(21) Application number: 09749960.2
(22) Date of filing: 27.04.2009
(51) Int. Cl.: A23D 9/007, A23D 9/04, A23L 1/30

(54) **SYSTEM FOR NUTRITIONALLY IMPROVING, PREPARING AND INTRODUCING INNOVATIONS INTO OILS FOR FOOD USE**

(30) Priority: 22.05.2008 ES 200801497
(71) Applicant: Oleum Vitae, S.l., 46470 Catarroja (Valencia) (ES)
(72) Inventor: NOVEJARQUE CONDE, Jose Antonio, E-46470 Catarroja (Valencia) (ES)
(74) Representative: Ungria Lopez, Javier
(86) International application number: PCT/ES2009/070119
(87) International publication number: WO 2009/141476

(57) **Abstract**

Method for nutritionally preparing oils for food use using natural and biological, nutraceutical products, achieving a highly beneficial efficiency for the human organism and which is environmentally friendly. The invention also relates to the production of oils using said method.

## Description

### TECHNICAL FIELD OF THE INVENTION

The present invention comes within the food industry sector, particularly the production of enriched oils for human food use.

The novelty of the invention lies in the production of oils supplemented with natural and nutraceutical products by means of a production process that adds said products to the treated oils. This process consists of three stages comprising the preparation of the natural products and/or products coming from biological agriculture, the preparation of the chosen nutraceutical and the preparation of the final product by adding the above products to the desired oil or coupage and macerating the mixture. The process achieves oils with certain added nutritional characteristics superior to oils currently on the market.

### STATE OF THE ART

A legend relates that a cedar, a cypress and an olive were born on Adam's tomb in the meadows of mount TABOR.

In Genesis, the dove that returned to the Ark to inform Noah of the end of the universal flood bore an olive branch in its beak.

Greek mythology tells of the promise made by Zeus to grant possession of Attica to the deity who would give its inhabitants the most useful gift. It was Athena, goddess of wisdom and of peace, who won, offering the olive and its oil as a present, thus becoming protector of the city with the olive being planted on the rock of the Acropolis.

The Greeks introduced it into Italy, it spread through North Africa and later on to Spain and Portugal.

We are indebted to the Romans for the spread of olive growing and its extension throughout the world.

The system of obtaining olive oil is unique among vegetable oils since it is extracted by purely mechanical means from the fresh pulp of the fruit. Since time immemorial, olive oil has been flavored with the introduction of spices and plants, along with the maceration of certain exquisite and unique products such as truffles.

The document closest to the state of the art is Spanish patent ES 2169990, which describes the addition of vitamin E to the receptor oil. The result is a final oil that is effectively enriched in this element, which is limited to being added mechanically in the vat containing the oil once it has been prepared. The main difference with the present invention is that the latter considers certain products which need to have been mixed, homogenized and macerated with the starting oil, requiring a process control and some results that are compatible with each type of oil. The present invention for the first time mixes fruits with the oil, maintaining the uses and certain organoleptic characteristics that are similar to the latter.

Other publications forming part of the state of the art are patent application ES 2017551, which describes fish oil to which different components are added for being consumed as a nutritional supplement, or ES 2023544, which also describes the manufacture of a food product achieve starting from wheat-germ oil.

### REFERENCES

- UNE-EN ISO 14644: "Clean rooms and annex premises".
- ES 2169990: NARANJO M, "Method for obtaining extra virgin oil enriched with vitamin E".
- ES 2017551: AVIV H, "Edible product on the basis of fish oil, lecithin, unsaturated oil and cacao or similar type solidification agent".
- ES 2023544: MARCHAN S, "Method of manufacture of a food agent based on wheat-germ oil".

### DESCRIPTION OF THE INVENTION

The present invention consists of a method for obtaining oil enriched with chosen natural and nutraceutical products, of great quality and highly beneficial for human beings.

This method comprises the following stages:
- PHASE A: concentration of the natural products that are going to be added.

Natural products and/or products coming from biological agriculture are prepared, for which some "clean rooms" (UNE-EN ISO 14644) are used, specially equipped and fitted out for the process. In them, the natural product and/or product from biological agriculture which is intended to be used is selected and prepared; among others, vegetables, fruits, spices, herbs, oleaginous nuts, coffee, cacao, chocolate, oleoresins of spices, beehive products, fish and seafood, and their corresponding coupages.

A preferred embodiment of the invention is that said vegetables or fruits, or the oleoresins of spices, come from biological agriculture.

Another preferred embodiment of the invention is that said herbs are tea, maté or spearmint.

Once it has been selected, it is weighed and the desired percentage in the final product is determined. It is then introduced into a suitable stainless steel tank and the chosen function necessary for the processing and concentration of each food is carried out. This processing can be grinding, pressing, concentrating, maceration, filtering or any other that achieves the said end.

Once the concentrate has been obtained from the chosen food, the process is continued by introducing it into the stainless steel hopper of the stainless steel ultrasonic device specially prepared for this, and it is made to pass through a closed circuit for a time of between 20 and 65 minutes and at a temperature of between 10°C and 30°C.

A preferred form of doing this is to pass it through a closed circuit for between 20 and 45 minutes and at a temperature of between 15°C and 30°C.

Once this step of ultrasonic fracture is completed, the filtering of the obtained products is commenced with a special tangential ceramic filter, taking into account the different processes as is suited to the selected food. Microfiltration, ultrafiltration, nanofiltration or reverse osmosis will be used. - PHASE B: preparation of the chosen nutraceutical product.

Next, the nutraceuticals are prepared that have been chosen and selected for the different types of oils or coupages of the process, which are weighed and mixed until their complete homogenization.

Different embodiments of the invention include as nutraceuticals sultanas, quinoa grain, golden flax seeds, buckwheat, spelt grain, fine bulgur, textured soy protein, pumpkin seeds, essential amino-acids and vitamins.

A preferred embodiment is for the fine bulgur to be 1-1.8 mm.

Another preferred embodiment of the invention is that the vitamins arc vitamin C or vitamin E. - PHASE C: addition of said natural products and nutraceuticals to the oil or coupage until their complete homogenization, followed by mixing and maceration.

The selected oil or coupage is prepared and introduced into a stainless steel tank prepared for mixing and maceration. The concentrate from the food prepared in PHASE A is added until its complete homogenization in an approximate volume of 5% of the manufacturing total. Next the nutraceuticals are added and the entire product is mixed for 10 to 30 min.

A preferred embodiment is to mix for between 10 and 50 min. It is then macerated for 30 to 40 days at a temperature of between 5°C and 25°C.

Different embodiments of the invention include choosing the oil for enriching from among sunflower oil, peanut oil, safflower oil, soy oil, wheat-germ oil, cotton oil, grape-pip oil, olive oil, canola oil, almond oil, walnut oil, sesame oil and pumpkin seed oil, and their corresponding coupages.

A preferred embodiment consists of said olive oil being selected from among the group comprising refined oil, extra virgin oil or refined olive pomace.

Another preferred embodiment of the invention consists of said extra virgin olive oil coming from biological agriculture.

The most preferred embodiment of the present invention is the final oil enriched by the above process.

### EXAMPLES

### Example 1

Mango fruit is selected and the manufacture of 500 kg ot finished product are prepared, carrying out the following steps:
- PHASE A: The mango concentrate is prepared in a white room specially fitted out for the process according to certain criteria of cleanliness. 3.5 kg of concentrate are mixed in 25 kg (5% of the total) of sunflower oil.
- PHASE B; Once the mixture is homogenous, the following nutraceutical are added to it: 1.5 kg of essential amino-acids, 12 kg of sultanas and 6 kg of pumpkin seeds until their complete homogenization.
- PHASE C: They arc mixed in the stainless steel tank with 475 kg of sunflower oil for a mixing time of between 10 and 30 min. It is macerated for a time of between 30 and 40 days at a temperature of between 5°C and 25°C.
   It is then packed for distribution and sale.

### Example 2

Coupage (nutraceuticals, fruit and oil).

Passion fruit is selected and 100 kg of finished product are prepared, carrying out the following steps:
- PHASE A: The passion fruit concentrate is prepared in a white room specially fitted out for the process according to certain criteria of hygiene 10 kg of passion fruit concentrate are mixed in 50 kg of premium extra virgin avocado oil.
- PHASE B: Once the mixture is homogenous, the following nutraceuticals are added to it: 1.67 kg of Aloe vera and 100 grams of Zn until their complete homogenization.
- PHASE C: They are mixed in the stainless steel tank with 10 kg of bio extra virgin olive oil during their mixing time (between 12 and 25 minutes). It is macerated for a time of 10 days at a temperature of between 5°C and 25°C.

It is then proceeded to be packed for distribution and sale.

## Claims

1. Method for obtaining enriched oil, **characterised in that** it comprises:
• concentrating the natural products that are going to be added,
• preparing the chosen nutraceutical products, and
• adding said natural and nutraceutical products to the oil or coupage until their complete homogenization,
• followed by mixing and maceration.

2. Method according to claim 1, **characterized in that** the preparation of the natural products is carried out by means of
• btaining the concentrate,
• subjection to ultrasonic fracture,
• filtering of the product that is obtained.

3. Method recording to claims 1 or 2, **characterized in that** said obtaining of the concentrate is carried out by means of grinding, pressing, concentrating, maceration or filtering.

4. Method according to one of Claims 1 to 3, **characterized in that** said ultrasonic fragmentation is carried out for a time of between 20 and 65 min.

5. Method according to one of claims 1 to 3, **characterized in that** said ultrasonic fragmentation is carried out for a time of between 20 and 45 min.

6. Method according to one of claims 1 to 5, **characterized in that** said ultrasonic fragmentation is carried out at a temperature of between 15°C and 30°C.

7. Method according to one of claims 1 to 5, **characterized in that** said ultrasonic fragmentation is carried out at a temperature of between 10°C and 30°C.

8. Method according to one of claims 1 to 7, **characterized in that** said filtration is selected from among microfiltration, ultrafiltration, nanofiltration or reverse osmosis.

9. Method according to any of claims 1 to 8, **characterized in that** said natural products are chosen from among the group comprising vegetables, fruits, spices, herbs, oleaginous nuts, coffee, cacao, chocolate, oleoresins of spices, beehive products, fish and seafood, and their corresponding coupages.

10. Method according to claim 9, **characterized in that** said vegetables come from biological agriculture.

11. Method according to claim 9, **characterized in that** said fruits, come from biological agriculture.

12. Method according to claim 9, **characterized in that** said oleoresins of spices come from biological agriculture.

13. Method according to claim 9, **characterized in that** said herbs are chosen from among the group comprising tea, maté or spearmint.

14. Method according to one of claims 1 to 13, **characterized in that** said nutraceutical products are selected from among the group comprising sultanas, quinoa grain, golden flax seeds, buckwheat, spelt grain, fine bulgur, textured soy protein, pumpkin seeds, essential amino-acids and vitamins.

15. Method according to claim 14, **characterized in that**.
said the fine bulgur is of between 1-1.8 mm.

16. Method according to claim 14, **characterized in that** said vitamins are vitamin C or vitamin E.

17. Method according to one of claims 1 to 16, **characterized in that** said oil is chosen from among the group comprising sunflower oil, peanut oil, safflower oil, soy oil, wheat-germ oil, cotton oil, grape-pip oil, olive oil, canola oil, almond oil, walnut oil, sesame oil and pumpkin seed oil, and their corresponding coupages.

18. Method according to claim 17, **characterized in that** said olive oil is selected from among the group comprising refined oil, extra virgin oil and refined olive pomace.

19. Method according to claim 18, **characterized in that** said extra virgin olive oil comes from biological agriculture.

20. Method according to any of claims 1 to 19, **characterized in that** said mixing lies within a time of 10 to 30 min.

21. Method according to any of claims 1 to 19, **characterized in that** said mixing lies within a time of 10 to 50 min.

22. Method according to any of claims 1 to 21, **characterized in that** said maceration is carried out for a time of 30 to 40 days.

23. Method according to any of claims 1 to 22, **characterized in that** said maceration is carried out at a temperature of from 5°C to 25°C

24. Enriched oil **characterized in that** said it has been obtained according to the method of any of claims 1 to 23.
